# FASCICULE DE BREVET EUROPEEN

(11) **EP 2 769 336 B1**
(45) Date de publication et mention de la délivrance du brevet: **30.12.2015**
(21) Numéro de dépôt: 12770517.6
(22) Date de dépôt: 15.10.2012
(51) Int. Cl.: G06K 17/00, B41J 3/407, B41J 3/50

(54) **MODULE D'ENCODAGE SANS CONTACT DE CARTE PLASTIQUE**
KONTAKTLOSES PLASTIKKARTEN-KODIERUNGSMODUL
CONTACTLESS PLASTIC CARD ENCODING MODULE

(30) Priorité: 19.10.2011 FR 1159418
(43) Date de publication de la demande: 27.08.2014
(73) Titulaire: Evolis, 49070 Beaucouze (FR)
(72) Inventeur: BERTHAUD, Emmanuel, F-49070 Beaucouze (FR); LETARD, Benoit, F-49070 Beaucouze (FR)
(74) Mandataire: Maillet, Alain
(86) Numéro de dépôt international: PCT/EP2012/070432
(87) Numéro de publication internationale: WO 2013/057076

(56) Documents cités:
- EP-A1- 2 179 931
- US-A1- 2006 001 526

## Description

La présente invention concerne un module d'encodage sans contact de carte plastique destiné à être monté sur le châssis d'une imprimante de carte plastique.

Il est connu des imprimantes qui assurent l'encodage sans contact de pistes magnétiques et/ou de puces présentes sur une carte plastique. A cet effet, ces imprimantes comportent un module d'encodage sans contact qui comporte un support, habituellement fixé sur le châssis de l'imprimante et une carte électronique positionnée dans ce support. Les dimensions du support sont alors adaptées à celles de la carte électronique pour que ce support puisse recevoir et maintenir en position cette carte électronique.

Le module d'encodage sans contact est habituellement relié par un câble à un autre module, également monté sur l'imprimante et habituellement appelé coupleur. Ce coupleur fournit alors au module d'encodage sans contact les données à encoder sur une carte plastique alors présente dans l'imprimante. La carte électronique du module d'encodage, qui assure également la fonction d'une antenne de type RFID, encode alors ces données sur une puce de cette carte plastique.

Les dimensions des cartes électroniques varient d'un fabricant à l'autre et il est alors impératif de concevoir des réservations sur le châssis de l'imprimante et des supports qui sont spécifiques à chacune de ces cartes, c'est-à-dire qu'il est nécessaire de concevoir un module d'encodage particulier pour chaque type de carte électronique.

Le problème résolu par la présente invention est d'universaliser le module d'encodage sans contact, c'est-à-dire de concevoir un module d'encodage sans contact qui puisse recevoir tout type de carte électronique d'encodage de données sans contact.

A cet effet, la présente invention concerne un module d'encodage sans contact de carte plastique qui est destiné à être monté sur le châssis d'une imprimante de carte plastique. Ledit module comportant une carte électronique qui assure la fonction d'encodage de carte plastique, le module est caractérisé en ce qu'il comporte :
- un support creux comportant des moyens pour fixer ce support sur le châssis de l'imprimante,
- un moyen en matière souple destiné à être positionné au fond du support creux et à recevoir la carte électronique, et
- un moyen de maintien en position de la carte électronique sur le moyen en matière souple.

Le problème technique est résolu par la combinaison du support creux, du moyen en matière souple et du moyen de maintien. En effet, le support creux permet de loger le moyen en matière souple, le moyen en matière souple permet d'absorber d'éventuels reliefs de la carte électronique induits, par exemple, par des composants se trouvant sur l'une de ses faces, et le moyen de maintien permet de plaquer la carte électronique contre le moyen souple même si les dimensions de cette carte varient (dans la limite, bien entendu, des dimensions du support). Le module d'encodage selon la présente invention peut donc recevoir plusieurs types de carte électronique sans pour autant changer son support ou encore son moyen de maintien en position de la carte électronique.

Selon un mode de réalisation, le moyen de maintien est un élastique dont les extrémités sont prises dans des ergots qui sont solidaires du support.

Ce mode de réalisation est simple et peu onéreux. Il permet également un maintien sûr en position de la carte, ce qui est essentiel lors de l'utilisation de ce module pour l'encodage de données sur une carte plastique.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:
La Fig. 1 représente une vue en perspective d'une imprimante à cartes plastiques selon la présente invention.
La Fig. 2 représente une vue de côté de l'imprimante à cartes plastiques avec un module de communication sans contact en place sur le châssis de l'imprimante.
La Fig. 3 représente un module d'encodage sans contact de cartes plastiques selon la présente invention.

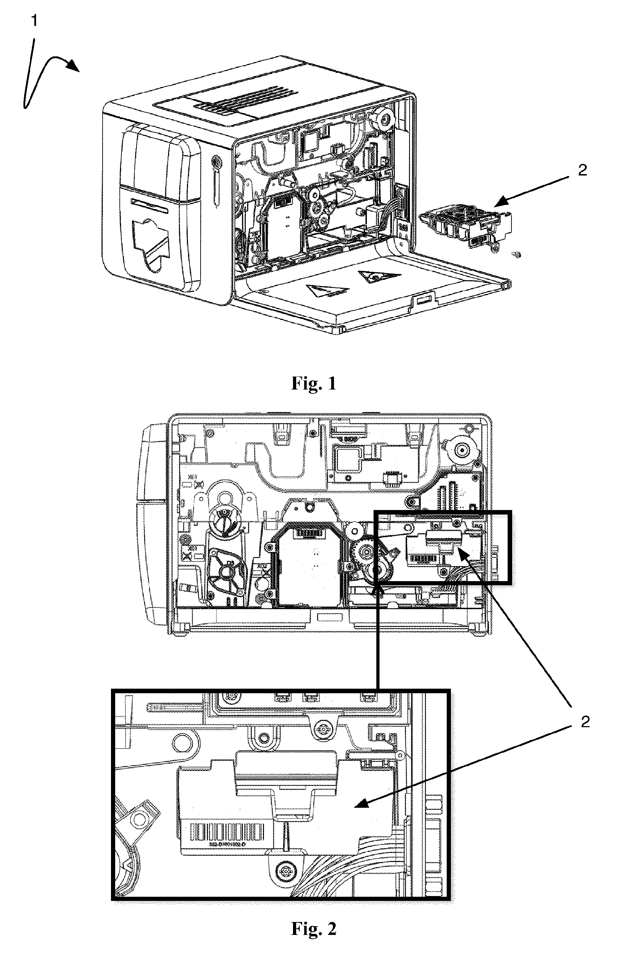

A la Fig. 1 est représenté un exemple d'imprimante de carte plastique 1. Il est également représenté schématiquement un module d'encodage sans contact de carte plastique 2 dans une position alignée avec une réservation prévue dans le châssis de l'imprimante. A la Fig. 2, est représentée l'imprimante 1 lorsque le module d'encodage 2 a été introduit dans sa réservation et fixé au châssis de cette imprimante par exemple en le vissant sur ce châssis.

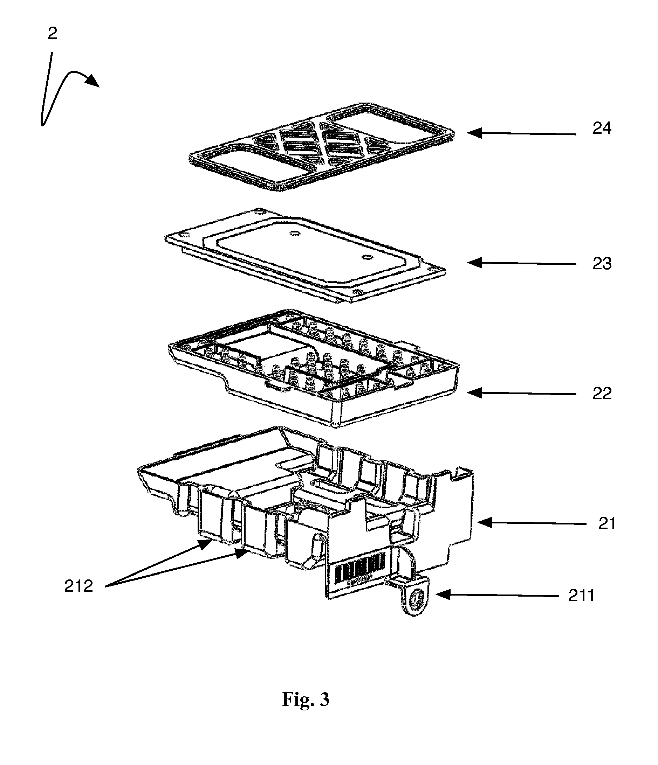

La Fig. 3 représente un module d'encodage sans contact 2 de carte plastique selon la présente invention.

Ce module 2 comporte une carte électronique 23 qui assure une fonction d'encodage de carte plastique et une communication sans contact par exemple de type RFID, un support creux 21 qui comporte des moyens 211 pour fixer ce support sur le châssis de l'imprimante par exemple par vissage, un moyen en matière souple 22, tel qu'une mousse, qui est destiné à être positionné au fond du support creux 21 et à recevoir la carte électronique 23, et un moyen de maintien 24 en position de la carte électronique sur le moyen souple.

Selon un mode de réalisation, le moyen de maintien 24 est un élastique, par exemple un élastomère SEBS, dont les extrémités sont prises dans des ergots qui sont solidaires du support 21.

## Revendications

1. Module d'encodage sans contact de carte plastique (2) destiné à être monté sur le châssis d'une imprimante de carte plastique (1), ledit module comportant une carte électronique (23) qui assure la fonction d'encodage de carte plastique, **caractérisé en ce que** le module comporte
- un support creux (21) comportant des moyens (211) pour fixer ce support sur le châssis de l'imprimante,
- un moyen en matière souple (22) destiné à être positionné au fond du support creux (21) et à recevoir la carte électronique (23), et
- un moyen de maintien (24) en position de la carte électronique sur le moyen en matière souple.

2. Module selon la revendication 1, dans lequel le moyen de maintien (24) est un élastique dont les extrémités sont prises dans des ergots (212) qui sont solidaires du support (21).

3. Module selon la revendication 1 ou 2, dans lequel la matière souple est une mousse.

## Patentansprüche

1. Kontaktloses Plastikkarten-Kodierungsmodul (2), das dazu bestimmt ist, auf dem Gehäuse eines Plastikkartendruckers (1) angebracht zu werden, wobei das Modul eine elektronische Karte (23) aufweist, die die Kodierungsfunktion der Plastikkarte erfüllt, **dadurch gekennzeichnet, dass** das Modul Folgendes aufweist:
- einen hohlen Träger (21), der Mittel (211) zum Befestigen dieses Träges auf dem Gehäuse des Druckers aufweist,
- ein Mittel aus flexiblem Material (22), das dazu bestimmt ist, am Boden des hohlen Trägers (21) angeordnet zu werden und die elektronische Karte (23) aufzunehmen, und
- ein Mittel zum Halten (24) der Position der elektronischen Karte auf dem Mittel aus flexiblem Material.

2. Modul nach Anspruch 1, wobei das Mittel zum Halten (24) ein Gummiband ist, dessen Enden von Hacken (212), die fest mit dem Träger (21) verbunden sind, gehalten werden.

3. Modul nach Anspruch 1 oder 2, wobei das flexible Material ein Schaum ist.

## Claims

1. Contactless plastic card encoding module (2) intended to be mounted on the frame of a plastic card printer (1), said module comprising an electronic card (23) which ensures the plastic card encoding function, **characterized in that** the module comprises
- a hollow support (21) comprising means (211) for fixing this support onto the frame of the printer,
- a means made of flexible material (22) intended to be positioned at the bottom of the hollow support (21) and to receive the electronic card (23), and
- a means (24) for holding the electronic card in position on the means made of flexible material.

2. Module according to Claim 1, in which the holding means (24) is an elastic whose ends are gripped in snugs (212) which are secured to the support (21).

3. Module according to Claim 1 or 2, in which the flexible material is a foam.
